# EUROPEAN PATENT SPECIFICATION

(11) **EP 1 361 116 B1**
(45) Date of publication and mention of the grant of the patent: **20.07.2005**
(21) Application number: 02010085.5
(22) Date of filing: 06.05.2002
(51) Int. Cl.: B60R 11/02

(54) **A motor vehicle computer system with an anti-theft detachable front plate and method for operating it**
Computersystem für ein Fahrzeug mit abnehmbarer Frontplatte zur Diebstahlssicherung und Betriebsverfahren hierfür
Système d'ordinateur pour un véhicule avec plaque frontale anti-vol detachable et procede de son operation

(43) Date of publication of application: 12.11.2003
(73) Proprietor: SIEMENS AKTIENGESELLSCHAFT, 80333 München (DE)
(72) Inventor: Slegers, Walter, Dr., 5612 RR Eindhoven (NL)

(56) References cited:
- WO-A-99/60548
- DE-A- 19 803 178
- DE-A- 19 935 893
- FR-A- 2 726 382
- US-A- 5 938 721
- PATENT ABSTRACTS OF JAPAN vol. 2000, no. 12, 3 January 2001 (2001-01-03) -& JP 2000 251196 A (NEC CORP), 14 September 2000 (2000-09-14)

## Description

The invention relates to a motor vehicle computer system that is arranged for running vehicle-associated computer programs, such including a vehicle navigation program, and comprising a vehicle-associated base station in engagement with a detachable front plate where the front plate is anti-theft designed with respect to a part or the whole of the base station, where the front plate comprises data oriented facilities that cooperate with the base station's data processing system and that are arranged for fulfilling a stand-alone data storage function in a detached state of the front plate, and where the front plate furthermore has a communication facility for hardwired attachment to an out-of-vehicle computer facility.

In-vehicle navigation systems are becoming widespread in modern cars. A user may specify an intended destination, whereupon the computer system will calculate an optimum route, and will during subsequent driving instruct the user person as to various aspects of the route to be taken, such as turns to make, points of interest that may be visited, and other. However, regardless of the growing sophistication and processing power of vehicle computer systems, the actual planning can take more time than the user has or is allowed to spend. Moreover, the planning of the route beforehand in a personal computer or the like may require even more time if the planning would require a dialog with the purpose of optimization or the fetching of pictures from a background file. This clearly shows the inconvenience of having to execute a sophisticated type of route planning in the motor vehicle itself.

In consequence, amongst other things, it is an object of the present invention to overcome the described inconveniences.

The vehicle computer system should preferably have some detachable part that could be physically exchanged with a remote computer, and which could be recognized by the user immediately as belonging to the vehicle computer system, such in contradistinction to general purpose data carriers such as floppy disks or solid state memory modules. Furthermore, the present inventor has recognized that state-of-the-art vehicle radio front plates would already accommodate various parts that were necessary for the approach. The docking of such detachable front plate to the motor vehicle base station is an operation that should be performed anyway, so that no extra in-vehicle activity would be necessary. Obviously, the combination of loading a remotely calculated route by means of a "traveling" front plate into the base system generates much synergy.

Now, US Patent 5,794,164 to Beckert et al. describes a vehicle computer system which executes vehicle navigation and other programs, and which has a detachable front plate that in a detached state constitutes a portable RF device for providing radio and communication capabilities. The execution of the vehicle navigation program is restricted however to the base station proper.

Furthermore, showing the features of the preamble of claim 1, DE 198 03 178 A1 describes a motor vehicle radio that has an anti-theft detachable front plate which has a display facility, electronic processing, storage, and an interface to the base station, for in a detached state constituting a Personal Digital Assistant. The latter can be detached and then interfaced to a personal computer, such as for the loading of control programs for the radio function or business appointments for the PDA function.

Still further, DE 199 39 433 A1 describes a motor vehicle radio that has a detachable front plate which in a detached state is largely stand-alone operational for playing compressed digital audio data, and which has a PC-interface for reading chip cards. Obviously, the front plate will then be "master" to the chip cards. The text of this application has hereinafter been used in modified form as a starting point of the disclosure of the present invention.

In FR-2 726 382-A1 an on-board vehicle information system is described which comprises an information module that is installed inside a vehicle, like a radio-telephone or a navigation system, and that is able to generate and store data and to deliver information based on these data to a portable device which comprises means to store this information.

Indeed, none of the references considers the portability of remotely constituted navigation route data to the motor vehicle computer system through storing thereof in a detachable front plate, where the route data is generated through executing a route planning program in an out-of-vehicle computer facility.

Now therefore, according to one of its aspects, the invention is characterized in that the data oriented facilities of the front plate constitute a memory facility which stores route data generated through executing a route planning program in the out-of-vehicle computer facility and which needs power only to read or write therein so that the front plate has no on-board power supply and is a slave station to the base station which operates as master, and in that the motor vehicle computer system is arranged for running the vehicle navigation program on the basis of these route data.

The invention also relates to a method for operating a motor vehicle computer system according to claim 3.

These and further aspects and advantages of the invention will be discussed more in detail hereinafter with reference to the disclosure of preferred embodiments, and in particular with reference to the appended Figures that show:
Figure 1, an overall block diagram of the motor vehicle computer system;
Figure 2, a block diagram of the front plate not within the scope of claim 1 as docked to a personal computer;
Figure 3, a flow chart embodiment of the method according to the present invention.

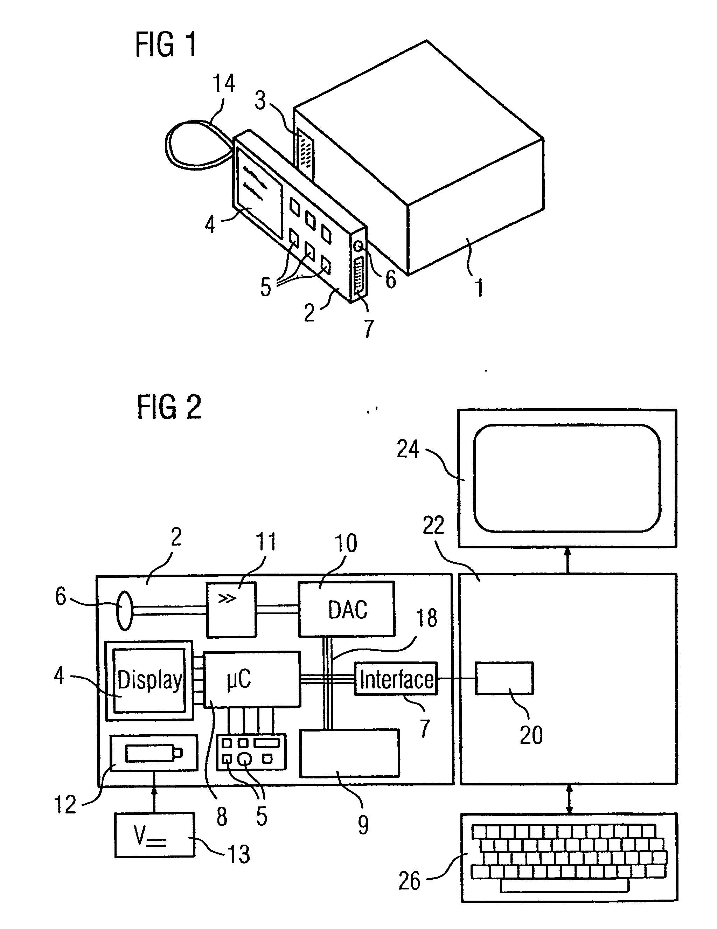

Figure 1 illustrates an overall block diagram of the motor vehicle computer system. Base station 1 is permanently installed in the motor vehicle, whereas anti-theft front plate 2 is electrically interfaceable to the base station through interface 3. Absent the front plate is the base station operative on at most a limited functionality level. As shown, the front plate comprises visual display 4 and control elements 5, such as buttons, switches, and the like. Loop 14 can be used for carrying the detached front plate by hand. The electro/mechanical arrangement of the engaging and dis-engaging of the front plate, and as the case may be, various control elements thereof, can be as taught by prior art. When engaged, the data processing facilities of the front plate can interact with the base station, and in particular, for therefor constituting a memory facility that stores programmed route data, for use in the subsequent guidance operation. Control elements 5 may be used for various purposes, such as those that pertain a radio functionality, or the activating of the guidance program. Furthermore, the front plate has a second interface 7 for interfacing to a remote computer, such as a personal computer, or to other data sources that can be hardwared according to the state of the art. By a choosing an appropriate compatible connector standard for the interface 3 of the front plate 2, this interface 3 may well be used for interfaceing to the base station 1 as well as to the above remote (personal) computer or other data sources, therewith allowing to dispense with said second interface 7. For brevity, the motor vehicle proper has not been shown in the Figure. As is well known, such motor vehicle can in various manners cooperate with the computer, such as through providing power supply, GPS position determining signals, and such other aspects that are known to persons skilled in the art.

Figure 2 illustrates a block diagram of the front plate 2 as docked to a personal computer 22. The central element is micro-controller 8, that in the disengaged state is autonomous for controlling the functionality of front plate 2. The microcontroller is linked to the input elements 5, the visual display 4, and local bus 18. The latter interfaces to main memory 9 that has enough capacity for storing the required data, and possibly program, for fulfilling the intended functionality level, and in particular, for allowing the guidance according to the present invention. The data in main memory 9 can be read or written through appropriate DMA exchanges for communicating with interface 7, and if required, via further peripherals such as Digital-to-Analog converter 10, amplifier 11, and loudspeaker or headphone plug 6 for audio output. Power supply is represented by battery 12 that is rechargeable by transient interconnection to power converter 13. However, in view of the costs of (rechargeable) battery power, power supply through a connection (not shown) with the personal computer 22 is preferred.

Further, interface 7 is shown detachably connected to a matching interface 20 of personal computer 22, that furthermore has keyboard 26 and display device 24. The physical arrangement of interface 7 has been shown in Figure 1. The further arrangement of the personal computer 22, such as represented by its internal bus, processor, ROM/RAM, mouse and various other components and peripherals can be according to the state of the art, and has in consequence not been shown in any further detail.

Now, according various modifications to the setup as shown, the detachable front plate 2 can have fewer facilities, such as through omitting the output audio channel elements 6, 10, 11. In such case, the on-board power supply 12 can be deleted as well, inasmuch in a detached state the data oriented facilities will need only minimal or no power at all. The microcontroller 8 can be in a standby state, and the data retention capability of storage 9 can amount to several days or longer as designed. Of corse, the zero power character of the detached front plate 2 may render it low-cost and low-weight. In fact, a low-cost realization would have a storage-only facility present regarding the present invention, that will need power only to read or write therein. Generally, the front plate 2 will then be a slave station to either the base station 1 or the personal computer 22 that operates as master.

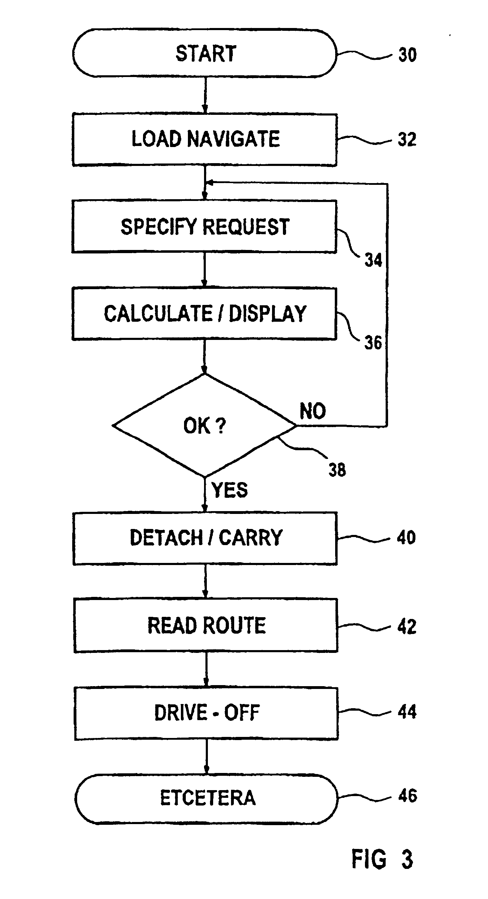

Figure 3 illustrates a flow chart embodiment of the method according to the present invention. In block 30, the operation commences, through physically interconnecting interfaces 7, 20, and starting the personal computer 22. In block 32, the navigation program is loaded, such as from hard disk, and furthermore, the necessary hardware and software facilities are assigned to the procedure. In block 34, the user specifies a request to the navigation program for calculating a route from a start location to a destination location, and such request may possibly include various secondary informations, such as the intended time or day of the travel, suggested time schedule regarding stops, certain points to pass or visit, and other. In block 36, the calculation of the route is effected, and the result thereof is displayed. In block 38, the system waits for an OK signal from the user or otherwise. The user may a have a diverging opinion of the best route, and for example, suggest a particular deviation, ask for extra information, such as a map or a photograph of a particular location (which should then of course be stored in the associated database), or specify further wishes, block 34. Subsequently, the system goes again to block 36. This loop may be traversed several times. In fact, its structure could be rather more complicated, in that several sub-loops, branches, etcetera were present, but this has not been further discussed for brevity.

If eventually the user is satisfied, the route data are loaded into storage 9 and in block 40 the front plate is detached from the personal computer 22 and carried to the intended motor vehicle, and docked with the base station 1 present in the pertinent vehicle. Then in block 42 the calculated route is read out from the front plate's main memory 9. If more than one route had been stored, this will require an associated selection by the user. If the start point of the calculated route does not correspond to the GPS position of the vehicle in question, an initial stretch may have to be calculated, but usually this stretch should be short, such as the way to the next crossing, or to the exit of a large parking lot; such will thus reduce this particular type of route planning to a rather vestigial activity. Note furthermore that route calculations will often proceed from the destination towards the starting point, so that the savings in time by practicing the invention will still be appreciable. Finally, in block 44, the driver gets the drive-off signal from the system. In block 46, various actions may still need to be taken, such as when the driver intentionally diverges from the calculated route, or when there would be a traffic jam that begins after the original calculation had been effected.

Now, the usage of the detachable front for carrying the route planning data to the motor vehicle are various. The motor vehicle computer does not need to access either map information or route information that could be provided by a broadcast type or internet type organization. This allows for omitting any interaction with a distant authority. Such will render the organization inexpensive, and will also allow for quite specific requests from a user and/or a complex negotiation, as it were, with the route planning system. In fact the barest minimum embodiment of the invention is reached when the extra facilities on the detachable front plate 2 reduce to exclusively zero-power storage of the route data. The connection to the personal computer 22 can be serial such as through USB. Wireless short-range connection to the personal computer 22 is feasible, but requires an additional power supply for the detachable front plate 2. On the other hand, the introduction of more intelligence in the detachable front 2 is consistent with the architectures of the next generation of motor vehicle radio/navigation systems. Such systems will in fact comprise a 32-bit microprocessor in the front itself.

In a practical embodiment of the invention, the micro controller 8 used typically has a build in serial communication port providing a communication interface with the base station 1. This port can also be used for communication with said personal computer 22. This is an alternative to interface 7.

Furthermore, apart from routes other information can be transferred from the personal computer 22 to the base station 1 via the detachable front 2 by an appropriate storage of such information in the main memory 9 of said detachable front 2. Such information may, for example, not only pertain to radio/navigation data or traffic information such as road works, locations where radar installations are active to test for speed violations, a list of user inputted destinations for one day, etcetera, but also to more general user specific information such as an address book. It may well be clear, that information can also be transferred in the reverse direction, i.e. from base station 1 to the personal computer 22. Such information may, for example, pertain to total distance driver, which destinations visited, maximum speed, etcetera.

## Claims

1. A motor vehicle computer system that is arranged for running vehicle-associated computer programs, such including a vehicle navigation program, and comprising a vehicle-associated base station (1) in engagement with a detachable front plate (2) where the front plate (2) is anti-theft designed with respect to a part or the whole of the base station (1), where the front plate (2) comprises data oriented facilities that cooperate with the base station's (1) data processing system and that are arranged for fulfilling a stand-alone data storage function (9) in a detached state of the front plate (2), and where the front plate (2) furthermore has a communication facility (7) for hardwired attachment to an out-of-vehicle computer facility (22), the motor vehicle computer system being **characterized in that** the data oriented facilities of the front plate (2) constitute a memory facility (9) which stores route data generated through executing a route planning program (36) in the out-of-vehicle computer facility (22) and which needs power only to read or write therein so that the front plate (2) has no on-board power supply and is a slave station to the base station (1) which operates as master, and **in that** the motor vehicle computer system is arranged for running the vehicle navigation program on the basis of these route data.

2. A motor vehicle computer system as claimed in Claim 1, being **characterized in that** the base station (1) is operative on a limited functionality level when the front plate (2) is absent.

3. A method for operating a motor vehicle computer system that is arranged for running a vehicle navigation program on the basis of route data and that comprises a vehicle-associated base station (1) in engagement with an anti-theft detachable front plate (2), the method comprising the steps: physically interconnecting a communication facility (7) of the front plate (2) with a matching interface (20) of an out-of-vehicle computer facility (22), calculating a route from a start location to a destination location in the out-of-vehicle computer facility (22), loading the route data into a memory facility (9) of the front plate (2), detaching the front plate (2) from the out-of-vehicle computer facility (22), carrying the front plate (2) to the motor vehicle where the base station (1) is present and docking the front plate (2) with the base station (1), reading out the route data from the memory facility (9) of the front plate (2).

4. A method as claimed in Claim 3, **characterized in that** more than one route is stored in the memory facility (9) of the front plate.

5. A method as claimed in Claim 3 or 4, **characterized in that** an initial stretch is calculated, if the start location of the calculated route does not correspond to the GPS position of the vehicle.

## Patentansprüche

1. Kraftfahrzeug-Computersystem, das dafür ausgelegt ist, fahrzeugassoziierte Computerprogramme, wie zum Beispiel ein Fahrzeugnavigationsprogramm, auszuführen, und das eine fahrzeugassoziierte Basisstation (1) in Eingriff mit einer ablösbaren Frontplatte (2) umfaßt, wobei die Frontplatte (2) in bezug auf einen Teil der Basisstation (1) oder die gesamte Basisstation (1) für Antidiebstahl ausgelegt ist, wobei die Frontplatte (2) datenorientierte Einrichtungen umfaßt, die mit dem Datenverarbeitungssystem der Basisstation (1) kooperieren und die dafür ausgelegt sind, in einem abgelösten Zustand der Frontplatte (2) eine eigenständige Datenspeicherfunktion (9) zu erfüllen, und wobei die Frontplatte (2) weiterhin eine Kommunikationseinrichtung (7) zur fest verdrahteten Anbringung an eine außerhalb des Fahrzeugs befindliche Computereinrichtung (22) aufweist, wobei das Kraftfahrzeug-Computersystem **dadurch gekennzeichnet ist, daß** die datenorientierten Einrichtungen der Frontplatte (2) eine Speichereinrichtung (9) darstellen, die Routendaten speichert, die durch Ausführen eines Routenplanungsprogramms (36) in der außerhalb des Fahrzeugs befindlichen Computereinrichtung (22) erzeugt werden, und die Strom nur zum Lesen oder Schreiben darin benötigt, so daß die Frontplatte (2) keine On-Borad-Stromversorgung besitzt und gegenüber der Basisstation (1), die als Master operiert, eine Slave-Station ist, und **dadurch**, daß das Kraftfahrzeug-Computersystem dafür ausgelegt ist, das Fahrzeugnavigationsprogramm auf der Basis dieser Routendaten auszuführen.

2. Kraftfahrzeug-Computersystem nach Anspruch 1, **dadurch gekennzeichnet, daß** die Basisstation (1) auf begrenztem Funktionalitätsniveau betreibbar ist, wenn die Frontplatte (2) fehlt.

3. Verfahren zum Betrieb eines Kraftfahrzeug-Computersystems, das dafür ausgelegt ist, auf der Basis von Routendaten ein Fahrzeugnavigationsprogramm auszuführen und das eine fahrzeugassoziierte Basisstation (1) in Eingriff mit einer ablösbaren Antidiebstahl-Frontplatte (2) umfaßt, mit den folgenden Schritten:
physisches Verbinden einer Kommunikationseinrichtung (7) der Frontplatte (2) mit einer passenden Schnittstelle (20) einer außerhalb des Fahrzeugs befindlichen Computereinrichtung (22), Berechnen einer Route von einem Startort zu einem Zielort in der außerhalb des Fahrzeugs befindlichen Computereinrichtung (22), Laden der Routendaten in eine Speichereinrichtung (9) der Frontplatte (2), Ablösen der Frontplatte (2) von der außerhalb des Fahrzeugs befindlichen Computereinrichtung (22), Tragen der Frontplatte (2) zu dem Kraftfahrzeug, in dem die Basisstation (1) vorhanden ist, und Docken der Frontplatte (2) mit der Basisstation (1), wobei die Routendaten aus der Speichereinrichtung (9) der Frontplatte (2) ausgelesen werden.

4. Verfahren nach Anspruch 3, **dadurch gekennzeichnet, daß** mehr als eine Route in der Speichereinrichtung (9) der Frontplatte gespeichert wird.

5. Verfahren nach Anspruch 3 oder 4, **dadurch gekennzeichnet, daß** eine anfängliche Strecke berechnet wird, wenn der Startort der berechneten Route nicht der GPS-Position des Fahrzeugs entspricht.

## Revendications

1. Système informatique pour véhicule à moteur qui est configuré pour exécuter des programmes informatiques associés à un véhicule, incluant un programme de navigation de véhicule, et comprenant une station d e base associée au véhicule (1) en engagement avec une plaque frontale détachable (2), la plaque frontale (2) étant conçue de manière antivol par rapport à une partie ou à l'ensemble de la station de base (1), la plaque frontale (2) comprenant des moyens orientés vers des données qui coopèrent avec le système de traitement de données de la station de base (1) et qui sont configurés pour remplir une fonction autonome de mise en mémoire de données (9) à un état détaché de la plaque frontale (2), et la plaque frontale (2) possédant en outre un moyen de communication (7) pour fixation câblée à un équipement informatique hors véhicule (22), le système informatique de véhicule à moteur étant **caractérisé en ce que** les moyens orientés vers des données de la plaque frontale (2) constituent un moyen de mise en mémoire (9) qui mémorise les données d'itinéraire générées par l'intermédiaire de l'exécution d'un programme de tracé d'itinéraire (36) dans l'équipement informatique hors véhicule (22) et qui a besoin d'énergie uniquement pour y lire ou pour y écrire, si bien que la plaque frontale (2) ne possède aucune alimentation en énergie embarquée et est une station esclave par rapport à la station de base (1) qui fonctionne comme maître, et **en ce que** le système informatique de véhicule à moteur est configuré pour exécuter le programme de navigation de véhicule sur la base de ces données d'itinéraire.

2. Système informatique pour véhicule à moteur selon la revendication 1, **caractérisé en ce que** la station de base (1) fonctionne sur un niveau de fonctionnalité limité lorsque la plaque frontale (2) est absente.

3. Procédé de fonctionnement d'un système informatique pour véhicule à moteur qui est configuré pour exécuter un programme de navigation de véhicule sur la base de données d'itinéraire et qui comprend une station de base associée au véhicule (1) en engagement avec une plaque frontale détachable antivol (2), le procédé comprenant les étapes consistant à : interconnecter physiquement un moyen de communication (7) de la plaque frontale (2) avec une interface d'adaptation (20) d'un équipement informatique hors véhicule (22), calculer un itinéraire à partir d'une position de départ vers une position de destination dans l'équipement informatique hors véhicule (22), charger les données d'itinéraire dans un moyen de mise en mémoire (9) de la plaque frontale (2), détacher la plaque frontale (2) de l'équipement informatique hors véhicule (22), transporter la plaque frontale (2) jusqu'au véhicule à moteur où est présente la station de base (1) et amarrer la plaque frontale (2) à la station de base (1), lire les données d'itinéraire à partir du moyen de mise en mémoire (9) de la plaque frontale (2).

4. Procédé selon la revendication 3, **caractérisé en ce que** plusieurs itinéraires sont mis en mémoire dans le moyen de mise en mémoire (9) de la plaque frontale.

5. Procédé selon la revendication 3 ou 4, **caractérisé en ce qu'**une extension initiale est calculée, si la position de départ de l'itinéraire calculé ne correspond pas à la position GPS du véhicule.
